(19) Europäisches Patentamt
European Patent Office
Office européen des brevets

(11) **EP 4 429 833 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **22817558.4**

(22) Anmeldetag: **09.11.2022**

(51) Internationale Patentklassifikation (IPC):
**B21B 38/00** (2006.01)   **B21B 38/02** (2006.01)
**B21B 38/06** (2006.01)   **B21C 51/00** (2006.01)
**G01L 5/00** (2006.01)   **G01L 5/04** (2006.01)

(52) Gemeinsame Patentklassifikation (CPC):
**B21B 38/02; B21B 38/006; B21B 38/06; B21C 51/00; G01L 5/0076; G01L 5/045;**
B21B 38/00; G01B 7/345

(86) Internationale Anmeldenummer:
**PCT/EP2022/081337**

(87) Internationale Veröffentlichungsnummer:
**WO 2023/083893 (19.05.2023 Gazette 2023/20)**

(54) **MESSROLLE ZUM FESTSTELLEN EINER EIGENSCHAFT EINES ÜBER EINE MESSROLLE GEFÜHRTEN BANDFÖRMIGEN GUTS SOWIE VERWENDUNG EINER SOLCHEN MESSROLLE**

MEASURING ROLLER FOR DETERMINING A PROPERTY OF A STRIP-TYPE PRODUCT GUIDED OVER A MEASURING ROLLER, AND USE OF SUCH A MEASURING ROLLER

ROULEAU DE MESURE DESTINÉ À DÉTERMINER UNE PROPRIÉTÉ D'UN PRODUIT DE TYPE BANDE GUIDÉ SUR UN ROULEAU DE MESURE, ET UTILISATION D'UN TEL ROULEAU DE MESURE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.11.2021 DE 102021005558**

(43) Veröffentlichungstag der Anmeldung:
**18.09.2024 Patentblatt 2024/38**

(73) Patentinhaber: **VDEh-Betriebsforschungsinstitut GmbH**
**40237 Düsseldorf (DE)**

(72) Erfinder:
• **KRAMBEER, Hagen**
**41363 Jüchen (DE)**
• **DIEGELMANN, Volker**
**41812 Erkelenz (DE)**
• **KURZYNSKI, Jochen**
**40625 Düsseldorf (DE)**
• **SCHINDHELM, Jessica**
**41564 Kaarst (DE)**
• **KREMEYER, Julian**
**40723 Hilden (DE)**
• **NEUER, Marcus**
**40625 Düsseldorf (DE)**
• **WUNDE, Martin**
**44869 Bochum (DE)**

(74) Vertreter: **Uexküll & Stolberg Partnerschaft von Patent- und Rechtsanwälten mbB Beselerstraße 4 22607 Hamburg (DE)**

(56) Entgegenhaltungen:
WO-A1-02/070154     DE-A1- 102013 000 970
DE-A1- 102014 115 023     JP-A- H08 184 429

**Beschreibung**

Die Erfindung betrifft eine Messrolle zum Feststellen einer Eigenschaft eines über eine Messrolle geführten bandförmigen Guts.

Aus WO 2020/174001 A1 ist eine Messrolle zum Feststellen einer Eigenschaft eines über die Messrolle geführten bandförmigen Guts, insbesondere von Metallband, bekannt. Bei dieser Messrolle ist ein Grundkörper mit einer Umfangsfläche vorgesehen, wobei mindestens eine Ausnehmung in dem Grundkörper vorgesehen ist und ein Kraftsensor in der Ausnehmung angeordnet ist. In der WO 2020/174001 A1 wird vorgeschlagen, über der Ausnehmung einen Schichtauftrag auszubilden.

Aus WO 2020/120329 A1 ist es bekannt, in einer Ausnehmung des Messrollenkörpers einer Messrolle einen ersten piezoelektrischen Kraftsensor neben einem zweiten piezoelektrischen Kraftsensor anzuordnen und die beiden Kraftsensoren so nahe beieinander anzuordnen, dass entweder die Sensorfläche des ersten piezoelektrischen Kraftsensors an die Sensorfläche des zweiten piezoelektrischen Kraftsensors unmittelbar angrenzt oder der erste piezoelektrische Kraftsensor so nah neben dem zweiten piezoelektrischen Kraftsensor angeordnet ist, dass der Winkel zwischen einer in Radialrichtung der Messrolle verlaufenden Endbegrenzungslinie, die den Punkt der Sensorfläche des ersten Kraftsensors schneidet, der der Sensorfläche des zweiten Kraftsensor am nächsten ist, und einer Linie, die in der Ebene verläuft, die die Endbegrenzungslinie und die Linie enthält, die den Punkt der Sensorfläche des ersten Kraftsensors, der der Sensorfläche des zweiten Kraftsensors am nächsten liegt, mit dem Punkt der Sensorfläche des zweiten Kraftsensors, der der Sensorfläche des ersten Kraftsensors am nächsten liegt, verbindet, und die Endbegrenzungslinie im Schnittpunkt der Endbegrenzungslinie mit der Umfangsfläche schneidet, und den Punkt der Sensorfläche des zweiten Kraftsensors schneidet, der der Sensorfläche des ersten Kraftsensors am nächsten liegt, kleiner als 65° ist. Die Sensorfläche piezoelektrischer Kraftsensoren, die üblicherweise in Messrollen in diesem technischen Gebiet eingesetzt werden, haben typischer Weise einen Durchmesser von $\geq$ 30mm.

Mit den bisher eingesetzten Sensortypen ist es schwierig, Unplanheiten am Rand des Bandes mit der geforderten oder angestrebten Messgenauigkeit zu erfassen. Die Position der Bandkante kann häufig nicht ausreichend scharf ermittelt werden. Bei dünnen Bändern kann die Längenverteilung eines Bandes in Breitenrichtung und Längsrichtung einen sehr individuellen Verlauf annehmen. Dabei sind bei der Darstellung der Längenverteilung bei dünnen Bändern durch die begrenzte Zahl der möglichen diskreten Sensoren Grenzen gesetzt.

DE 10 2014 115023 A1 betrifft eine Planheitsmessrolle zur Ermittlung von Planheitsfehlern eines Metallbandes im Wege einer Messung der Bandzugspannungsverteilung über die Bandbreit.

Vor diesem Hintergrund lag der Erfindung die Aufgabe zugrunde, eine Messrolle zum Feststellen einer Eigenschaft eines über eine Messrolle geführten bandförmigen Guts vorzuschlagen, bei dem die Auflösung der festgestellten Eigenschaften erhöht ist.

Diese Aufgabe wird durch den Gegenstand des Anspruchs 1 gelöst. Vorteilhafte Ausführungsformen sind in den Unteransprüchen und der hiernach erfolgenden Beschreibung wiedergegeben.

Die Erfindung basiert auf dem Grundgedanken, anstelle der aus dem Stand der Technik bekannten piezoelektrischen Kraftsensoren, die in der Form, wie sie derzeit auf diesem technischen Gebiet eingesetzt werden, mit Sensorflächen eingesetzt werden, deren Größe > 600mm$^2$ ist, andere Sensoren einzusetzen, so dass in einem Segment des Messrollenkörpers, das

- durch einen Bereich der Umfangsfläche,
- zwei Radialebenen, die sich in der Längsachse des Grundkörpers schneiden und jeweils in eine Radialrichtung verlaufen und die Umfangsfläche schneiden, und
- zwei senkrecht zur Längsachse verlaufende Ebenen, die die Umfangsfläche schneiden,

begrenzt wird, wobei die in eine Ebene abgerollte Fläche des Bereichs der Umfangsfläche eine Größe von x mm$^2$ hat,
eine Anzahl y Sensoren angeordnet sind,
wobei

$$y > 2x/100.$$

Durch den erfindungsgemäßen Grundgedanken, Sensoren mit geringem Bauraum einzusetzen, wird die Möglichkeit geschaffen, mehrere Sensoren in einem Segment des Messrollenkörpers zu verbauen. Mit der Erfindung können beispielsweise auch Mikrowelligkeiten bestimmt werden. Die Erfindung nimmt es in einer bevorzugten Ausführungsform in den Blick, eine Messrolle mit Sensoren, insbesondere mit Drucksensoren, in der Weise auszustatten, wie ein Kamerachip mit Pixeln ausgestattet ist. Das schafft in einer bevorzugten Ausführungsform die Möglichkeit, die Daten der Sensoren, insbesondere die Daten der Drucksensoren, vorzuverarbeiten, zu komprimieren und in gleicher oder ähnlicher Weise, wie bei der Übertragung von Bildern eines Kamerachips, zu transportieren. Hierzu gibt es in der Informationstechnik geeignete Lösungen, die sich auf den erfindungsgemäßen Fall adaptieren lassen.

Durch die erfindungsgemäße Messrolle kann eine höhere laterale Messauflösung erreicht werden. Die hohe laterale Auflösung der Planheitsmessung lässt sich sowohl in Breiten- als auch in Längsrichtung realisieren. Durch die hohe laterale Auflösung über der Umfangsrichtung der Messrolle können weitere Größen, wie Querbogen oder Bandverlauf ermittelt werden. Bandrisse an der Bandkante oder Fehlstellen können detektiert werden. Des Weiteren können ausreichend große Fehler der Bandtopografie (beispielsweise Zundernarben, Schalen, Löcher) detektiert werden. Beim Einsatz einer Gegenrolle können auch Dickenschwankungen abgeleitet werden. Planheitsfehler im Bereich von Wellenlängen <10mm und Amplituden um 1µm (die sogenannte Mikrowelligkeit) lassen sich mit der angestrebten Auflösung ebenfalls erfassen. Es ist davon auszugehen, dass Aussagen zu Eigenspannungen oder deren Verteilung sowie zu Lüderseffekten getroffen werden können.

Dabei ist die Bemessungsregel y>2x/100 als niedrige Untergrenze anzusehen, mit der die Vorteile der Erfindung erzielt werden können. In einer bevorzugten Ausführungsform ist die Anzahl y der Sensoren in dem Segment y>2x/10. In einer bevorzugten Ausführungsform ist die Anzahl y der Sensoren in dem Segment

$$y> (FAKTOR/10) \, x$$

mit FAKTOR >20, vorzugsweise mit FAKTOR >200, vorzugsweise mit FAKTOR >2000, vorzugsweise mit FAKTOR >20.000, vorzugsweise mit FAKTOR >200.000.

Der Stand der Technik verwendet - soweit ein drehbar gelagerter Grundkörper eingesetzt wird - regelmäßig Vollrollen, in deren Umfangsoberfläche Ausnehmungen eingebracht werden. Diese Ausnehmungen sind häufig radial von der Umfangsoberfläche des Grundkörpers nach innen führende Taschen. In anderen Ausführungsformen wird in die Umfangsoberfläche des Grundkörpers eine Nut eingebracht. Diese Nut verläuft in einigen Ausführungsformen parallel zur Längsrichtung des Grundkörpers. In anderen Ausführungsformen verläuft die Nut wie ein Teil eines Helix um die Umfangsfläche des Grundkörpers. Der Ansatz, Kraftsensoren in Ausnehmungen einzubringen, die in die Außenoberfläche eines Grundkörpers einer Messrolle eingebracht werden, hat hinsichtlich der möglichen Auflösung der festzustellenden Eigenschaft des bandförmigen Guts rein mechanische Begrenzungen. Selbst wenn man bei den aus dem Stand der Technik bekannten Bauformen die Anzahl der Kraftsensoren erhöhen würde, müsste man dafür die Anzahl der taschenartigen Ausnehmungen oder aber die Anzahl der Nuten erhöhen. Der möglichen Anzahl derartiger Taschen oder Nuten sind jedoch rein mechanische Grenzen gesetzt. Je höher die Zahl der Kraftsensoren desto geringer die verbleibende Stegbreite zwischen zwei Ausnehmungen.

Je geringer die Stegbreite zwischen zwei benachbarten Ausnehmungen, desto geringer wird die Stabilität des Außenumfangs des Grundkörpers. Je nach Anwendungsgebiet, insbesondere je nach Höhe des üblichen Kraftniveaus, mit dem das über die Messrolle geführte bandförmigen Gut auf die Messrolle einwirkt, müssen die Ausnehmungen deutlich beabstandet zueinander angeordnet werden, um beispielsweise Beschädigungen des Grundkörpers aufgrund der einwirkenden Kraft zu vermeiden und einen dauerhaften Einsatz der Messrolle zu ermöglichen.

Die Erfindung sieht in einer bevorzugten Ausführungsform vor, dass der Messrollenkörper einen Grundkörper und eine auf den Grundkörper aufgebrachte Schicht aufweist und die Messrolle mit einem drehbar gelagerten Grundkörper und einer Mehrzahl von Sensoren auszustatten, wobei nach dem erfindungsgemäßen Ansatz eine Schicht auf den Grundkörper aufgebracht wird, wobei zumindest einer der Sensoren in der Schicht angeordnet ist. Mit dieser bevorzugten Ausführungsform löst sich die Erfindung von dem Gedanken, Sensoren in Ausnehmungen einzusetzen, die als Taschen oder Nuten in die Außenumfangsfläche eines Grundkörpers eingebracht werden.

In einer bevorzugten Ausführungsform schließen die zwei Radialebenen, die sich in der Längsachse des Grundkörpers schneiden und jeweils in eine Radialrichtung verlaufen und die Umfangsfläche schneiden, einen Winkel ALPHA ein, der zwischen 2° und 180°, vorzugsweise zwischen 5° und 180°, vorzugsweise zwischen 10° und 180°, vorzugsweise zwischen 2° und 135°, vorzugsweise zwischen 2° und 95°, vorzugsweise zwischen 2° und 45°, vorzugsweise zwischen 5° und 135°, vorzugsweise zwischen 5° und 95°, vorzugsweise zwischen 5° und 45°, vorzugsweise zwischen 10° und 135°, vorzugsweise zwischen 10° und 95°, vorzugsweise zwischen 10° und 45° liegt.

In einer bevorzugten Ausführungsform entspricht der Abstand zwischen den beiden senkrecht zur Längsachse verlaufenden Ebenen der Länge des Grundkörpers. In einer alternativen, ebenfalls bevorzugten Ausführungsform, entspricht der Abstand zwischen den beiden senkrecht zur Längsachse verlaufenden Ebenen 5% bis 95% der Länge des Grundkörpers, vorzugsweise 5% bis 75% der Länge des Grundkörpers, vorzugsweise 5% bis 50% der Länge des Grundkörpers, vorzugsweise 25% bis 95% der Länge des Grundkörpers, vorzugsweise 25% bis 75% der Länge des Grundkörpers, vorzugsweise 25% bis 50% der Länge des Grundkörpers.

In einer bevorzugten Ausführungsform ist die Umfangsfläche des Grundkörpers die Außenfläche eines Zylinders und hat eine Größe aus dem Bereich von 0,4 bis 3,5 m², vorzugsweise aus dem Bereich von 2,5 bis 3 m².

Die Erfindung verfolgt in dieser bevorzugten Ausführungsform den Ansatz, eine Schicht und zumindest einen der Sensoren in der Schicht anzuordnen. Dieser Ansatz erlaubt es, beispielsweise in einer bevorzugten Ausführungsform unterschiedliche Materialien für den Grundkörper und die Schicht zu verwenden. Beispielsweise kann für den Grundkörper ein Material gewählt werden, das der Messrolle ihre grundsätzliche Stabilität verleiht, während für die Schicht ein Material verwendet werden kann, das möglicherweise nicht so starr ist, wie das für den Grundkörper verwendete Material, und somit möglicherweise sogar auch ein Quetschen der Schicht zulässt, das aber aufgrund dieser Elastizität zugleich erlaubt, die Sensoren möglichst nah benachbart zueinander anzuordnen.

Die Messrolle weist vorzugsweise einen Grundkörper auf. Vorzugsweise weist der Grundkörper eine geschlossene Umfangsfläche auf. In einer bevorzugten Ausführungsform ist der Grundkörper eine Vollrolle, die sich entlang einer Längsachse erstreckt.

Es sind Ausführungsformen denkbar, bei denen die auf den Grundkörper aufgebrachte Schicht nur im Bereich eines Kraftsensors auf der Umfangsfläche des Grundkörpers aufgetragen wird. Nach dem Auftragen der Schicht würde die Messrolle somit Oberflächenabschnitte aufweisen, die durch die Umfangsfläche des Grundkörpers gebildet würden (in den Bereichen, in denen auf die Umfangsfläche des Grundkörpers kein Schichtauftrag aufgetragen wurde), und Oberflächenabschnitte aufweisen, die durch die nach außen weisende Oberfläche der Schicht gebildet werden. Derartige Ausführungsformen haben den Vorteil, dass sie günstiger hergestellt werden können, weil der Schichtaufbau nicht über die gesamte Umfangsfläche des Grundkörpers aufgebracht werden muss.

Es sind Ausführungsformen denkbar, bei denen die Umfangsfläche des Grundkörpers vor dem Auftragen der Schicht nicht durchgängig zylinderförmig ist, sondern im Bereich der aufzutragenden Schicht eine Senke aufweist. Die Schicht kann dann so in dieser Senke ausgeführt werden, dass sie im Grund der Senke in Kontakt mit dem dortigen Teil der Umfangsfläche des Grundkörpers ist und eine Außenoberfläche aufweist, die sich nahtlos in die Oberflächenabschnitte des Grundkörper anschließt, die neben der Senke angeordnet sind.

In einer bevorzugten Ausführungsform wird die Schicht auf die gesamte Umfangsfläche des Grundkörpers aufgetragen. In einer bevorzugten Ausführungsform weist der Grundkörper eine zylinderförmige Außenoberfläche auf. In einer bevorzugten Ausführungsform wird die Schicht auf die gesamte zylinderförmige Außenoberfläche des Grundkörpers aufgetragen. In einer bevorzugten Ausführungsform weist die Schicht eine konstante Schichtdicke auf, so dass die Außenoberfläche der Schicht parallel zur Außenoberfläche des Grundkörpers verläuft.

In einer bevorzugten Ausführungsform ist zumindest einer der Sensoren in der Schicht angeordnet. In einer bevorzugten Ausführungsform wird die Schicht durch Grenzflächen begrenzt. Eine Grenzfläche der Schicht ist beispielsweise die Kontaktfläche der Schicht mit der Außenumfangsfläche des Grundkörpers. Eine andere Grenzfläche der Schicht ist beispielsweise die Außenoberfläche der Schicht. Ist die Schicht als Hohlzylinder auf einen zylinderförmigen Grundkörper aufgebracht, so sind weitere Grenzflächen der Schicht die stirnseitig angeordneten, kreisringförmigen Endflächen des Hohlzylinders. Ist eine Schicht in einer Senke eines Grundkörpers ausgebildet, so ist eine Grenzfläche der Schicht die Kontaktfläche der Schicht mit der die Senke bildenden Oberfläche des Grundkörpers und eine weitere Grenzfläche der Schicht die von der Schicht gebildete Außenoberfläche. In einer bevorzugten Ausführungsform ist der Sensor in dem Raum angeordnet, der durch die Grenzflächen der Schicht begrenzt wird.

Es sind Ausführungsformen denkbar, bei denen mehrere Schichten auf der Umfangsfläche des Grundkörpers verteilt auf den Grundkörper aufgebracht sind, wobei jede Schicht einen spezifischen Sensor aufweisen kann.

In einer Ausführungsform wäre einer der Sensoren der vorhandenen Sensoren in der Schicht angeordnet, während andere Sensoren in dem Grundkörper oder in einer anderen Schicht angeordnet wären. Bevorzugt ist jedoch die Mehrzahl (mehr als 50%) der vorhandenen Sensoren der Messrolle, insbesondere bevorzugt mehr als 75% der vorhandenen Sensoren, insbesondere bevorzugt mehr als 90% der vorhandenen Sensoren, insbesondere bevorzugt sind alle Sensoren in der Schicht (in einer Schicht) angeordnet. Bevorzugt ist die Mehrzahl (mehr als 50%) der vorhandenen Sensoren der Messrolle, insbesondere bevorzugt mehr als 75% der vorhandenen Sensoren, insbesondere bevorzugt mehr als 90% der vorhandenen Sensoren, insbesondere bevorzugt alle Sensoren in dem Raum angeordnet, der durch die Grenzflächen einer (einzigen) Schicht begrenzt wird.

Für das Anordnen des Sensors in der Schicht sind verschiedene Ansätze möglich. In einer bevorzugten Ausführungsform ist der Sensor in das Material, das die Schicht bildet, eingebettet. In einer solchen Ausführungsform steht jede Grenzfläche des Sensors in Kontakt mit dem Material, das die Schicht bildet, oder die Grenzfläche steht mittelbar, beispielsweise über einen Kleber, mit dem Material in Kontakt, das die Schicht bildet.

In einer bevorzugten Ausführungsform ist der Sensor in einer Ausnehmung in der Schicht angeordnet, wobei die Ausnehmung vom Sensor aus gesehen zumindest in die Mehrzahl (mehr als 50%), insbesondere bevorzugt in die überwiegende Mehrzahl (mehr als 75%) und insbesondere bevorzugt in alle Umfangsrichtungen durch das Material der Schicht begrenzt wird und/oder vom Sensor aus gesehen in radialer Rollenrichtung nach außen durch das Material der Schicht begrenzt wird.

In einer besonders bevorzugten Ausführungsform wird die Ausnehmung von dem Sensor aus gesehen auch in radialer Richtung nach innen durch das Material der Schicht begrenzt. Bei einer solchen Ausführungsform wäre die Ausnehmung mithin gänzlich von dem Material der Schicht umschlossen. In einer alternativen Ausführungsform kann vorgesehen sein, dass die Ausnehmung in der Schicht vom Sensor aus gesehen nach außen nur durch das Material einer weiteren Schicht, die auf die Schicht, die die Ausnehmung bildet, aufgebracht wird, begrenzt wird. Ergänzend oder alternativ kann die in der Schicht gebildete Ausnehmung für den Sensor vom Sensor aus gesehen in radialer Richtung nach innen durch das Material einer weiteren Schicht oder durch das Material des Grundkörpers begrenzt werden. Es sind Ausführungsformen denkbar, bei denen der Sensor auf die Außenoberfläche des Grundkörpers aufgesetzt wird und dann unter gleichzeitiger Bildung der Ausnehmung die Schicht im Schichtauftrag um den Sensor herum aufgebaut wird.

In einer bevorzugten Ausführungsform wird eine Vorspannung für den Kraftsensor vorgesehen, um einen stetigen Zusammenhang zwischen Druckkraft und Sensorsignal zu erhalten. Der Sensor kann als separates Bauteil in eine Ausnehmung des Rollenkörpers eingebracht und an der vorgesehenen Position vorgespannt werden, um einen Kraftschluss zum Rollenkörper zu gewährleisten. Der zum Einsetzen notwendige Spalt wird dadurch geschlossen. Wird der Sensor "in einem Guss" in die Schicht integriert, kann eine Vorspannung in diesem Sinne ggf. nicht mehr erforderlich sein. Ein weiterer Grund für eine Vorspannung könnte auch das Ziel sein, den Sensor in einem möglichst linearen Bereich zu betreiben oder überhaupt in seinen Arbeitsbereich (um einen Arbeitspunkt herum) zu bringen. Dies könnte an einem Sensor innerhalb einer Schicht durch lokale thermische, mechanische, elektrische, UV-Licht, piezoelektrisch, o.ä. Einwirkungen ebenfalls realisiert werden. Diese Überlegungen betreffen gleichermaßen die Systemkalibrierung.

Mit dieser Ausführungsform ist es möglich, dass die Schicht unter Bildung der Ausnehmung so um den Sensor herum aufgebaut wird, dass die Schicht vom Kraftsensor aus gesehen die Ausnehmung in radialer Richtung nach außen ebenfalls begrenzt. In einer alternativen Ausführungsform wird der Sensor auf die Außenoberfläche des Grundkörpers aufgesetzt und die Schicht unter Bildung der den Sensor aufnehmenden Ausnehmung um den Sensor herum aufgebaut, wobei die in der Schicht gebildete Ausnehmung zunächst radial nach außen offen bleibt und dann durch eine weitere Schicht verschlossen wird, so dass die Ausnehmung vom Sensor aus gesehen in radialer Richtung nach außen durch das Material einer weiteren Schicht begrenzt wird.

In einer bevorzugten Ausführungsform wird die Ausnehmung in der Schicht, in der ein Kraftsensor angeordnet ist,

- nur durch das Material der Schicht oder
- nur durch das Material der Schicht und das Material des Grundkörpers oder
- nur durch das Material der Schicht und einer auf den Außenumfang der Schicht aufgebrachten Beschichtung oder
- nur durch das Material der Schicht, das Material des Grundkörpers und das Material einer außen auf die Schicht aufgebrachten Beschichtung begrenzt.

In einer bevorzugten Ausführungsform wird die Ausnehmung in der Schicht, in der ein Kraftsensor angeordnet ist, nicht durch eine Abdeckung verschlossen.

Bei einer bevorzugten Ausführungsform wird die Schicht durch eine Folie oder Matte gebildet, die den Außenumfang des Grundkörpers zumindest um 180°, insbesondere bevorzugt um mehr als 180°, insbesondere bevorzugt um mehr als 270° und ganz besonders bevorzugt um 360° umschlingt. Der Einsatz einer Folie oder einer Matte zur Bildung der Schicht ermöglicht es, die Herstellungsverfahren für den Grundkörper und für die Schicht voneinander zu trennen. Der Grundkörper kann beispielsweise auf eine erste Weise hergestellt werden, beispielsweise aus einem Halbzeug hergestellt werden, während die Schicht auf andere Weise, beispielsweise aus Kunststoff hergestellt werden kann. Durch den Einsatz einer Folie oder Matte ist es auch möglich, jedwelche Verkabelung der Kraftsensoren in der Schicht auszubilden. Damit kann darauf verzichtet werden, im Grundkörper Kanäle für das Führen von Kabeln einbringen zu müssen. Ein entsprechender Grundkörper kann somit einfacher hergestellt werden.

In einer bevorzugten Ausführungsform wird die Folie oder die Matte fest mit der Außenumfangsfläche des Grundkörpers verbunden. Diese Verbindung kann beispielsweise durch Kleben, durch einen Klettverschluss oder durch formschlüssige Verbindungen wie Druckknöpfe oder Nut-Feder-Verbindungen mit Riefen in dem Grundkörper und Stegen an der dem Grundkörper zugewandten Seite der Folie erfolgen.

Es ist auch denkbar, die Folie bzw. die Matte mit Spannung um die Außenoberfläche des Grundkörpers zu schlingen, so dass allein durch die Spannung der Folie oder Matte eine radial nach innen wirkende Haltekraft gebildet wird, die die Folie oder Matte an der Außenoberfläche des Grundkörpers hält. Es ist denkbar, die Außenoberfläche des Grundkörpers zur Erhöhung der Haftung entsprechend vorzubereiten, beispielsweise aufzurauen. Es sind auch Verbindungen denkbar, die beispielsweise mittels Ladungstrennung (Luftballon reiben -> Haare zu Berge) zu resultierenden Mikro-Kräften führen und damit eine Haftung möglich machen. In der Chemie, z.B. durch Winkelanordnung der Molekülstrukturbestandteile, können Dipole (Wasser) oder durch Elektronenungleichgewichtsverteilungen in den Bindungen Mikro-Kräfte resultieren.

In einer bevorzugten Ausführungsform wird eine Folie vorgesehen, die die Sensoren und insbesondere bevorzugt auch eine Verkabelung enthält. In Bereichen, in denen sich weder Sensoren noch elektrische Verbindungen, noch elektronische Bauteile befinden, könnten Ausnehmungen, bspw. Löcher, vorgesehen sein. In einer bevorzugten Ausführungsform wird die Folie mit einer geeigneten Masse mit dem Grundkörper verklebt (Schichtauftrag durch Spritzen, Rollen, Spachteln oder 3D-Drucken). Durch die vorgeschlagenen Löcher würden Stege zwischen den Sensoren entstehen.

Es ist auch eine Ausführungsform denkbar, bei der die Schicht durch eine Folie oder eine Matte gebildet wird und außen um die Folie bzw. die Matte ein Halterohr aufgeschoben wird. Das Halterohr könnte auf die Folie aufgeschrumpft werden.

In einer bevorzugten Ausführungsform ist in der Schicht ein erster Sensor vorgesehen, der in Umfangsrichtung um weniger als 1,5m, insbesondere bevorzugt weniger als 1mm, insbesondere bevorzugt um weniger als 0,5mm von einem zweiten Sensor, der ebenfalls in der Schicht angeordnet ist, entfernt ist. Dabei bezieht sich die Entfernungsangabe "in Umfangsrichtung" auf die in Umfangsrichtung weisende Komponente einer den Mittelpunkt des ersten Sensors mit dem Mittelpunkt des zweiten Sensors verbindenden Linie. Sind der erste Sensor und der zweite Sensor auf einer rein in Umfangsrichtung weisenden Linie angeordnet, so ist in der bevorzugten Ausführungsform die Mitte des ersten Sensors in Umfangsrichtung um weniger als 1,5mm von der Mitte des zweiten Sensors entfernt angeordnet. Sind der erste Sensor und der zweite Sensor nicht auf einer in Umfangsrichtung weisenden Linie angeordnet, sondern zwar in Umfangsrichtung beabstandet voneinander angeordnet, aber auch in eine parallel zur Längsachse des Grundkörpers weisenden Richtung versetzt zueinander angeordnet, so bezieht sich die Maßangabe für die Beabstandung in Umfangsrichtung auf die in Umfangsrichtung weisende Komponente der die Mittelpunkte der beiden Sensoren verbindenden Linie.

In einer bevorzugten Ausführungsform ist die Mehrzahl der in dem Segment vorhandenen Sensoren (mehr als 50%), insbesondere bevorzugt die überwiegende Mehrzahl (mehr als 75%) oder insbesondere bevorzugt sind alle in dem Segment vorhandenen Sensoren in Umfangsrichtung um weniger als 1,5mm von einem benachbarten Sensor angeordnet. Durch das besonders nahe Anordnen der Sensoren zueinander wird die Auflösung erhöht. Da nach dem erfindungsgemäßen Konzept die Sensoren nicht mehr in Ausnehmungen des Grundkörpers der Messrolle angeordnet sein müssen, sondern gemäß einer bevorzugten Ausführungsform in der auf dem Grundkörper aufgebrachten Schicht angeordnet werden, wird die Möglichkeit geschaffen, die Sensoren näher zueinander anzuordnen, als das es bei den aus dem Stand der Technik bekannten Messrollen möglich ist.

In einer bevorzugten Ausführungsform ist die Mehrzahl (mehr als 50%) der in dem Segment angeordneten Sensoren, insbesondere bevorzugt die überwiegende Mehrzahl (mehr 75%) der in dem Segment angeordneten Sensoren und sind insbesondere bevorzugt alle in dem Segment vorhandenen Sensoren nach einem Raster in der Schicht angeordnet. In einer bevorzugten Ausführungsform sind die Abstände benachbarter Sensoren innerhalb des Rasters gleich. Es sind Ausführungsformen denkbar, bei denen einzelne Sensoren ergänzend zwischen die nach einem Raster angeordneten Sensoren angeordnet werden.

In einer bevorzugten Ausführungsform wird das Raster durch sich schneidende Linien gebildet, an deren Schnittpunkten die Sensoren angeordnet sind. Bezüglich der Ausrichtung der Linien sind folgende Ausführungsformen denkbar:

- Gemäß einer ersten Ausführungsform sind zwei Gruppen von Linien vorgesehen, wobei die Linien der ersten Gruppe parallel zueinander und in Umfangsrichtung verlaufen und die Linien der zweiten Gruppe parallel zueinander und parallel zur Längsrichtung des Grundkörpers verlaufen.

- Gemäß einer zweiten Ausführungsform sind zwei Gruppen von Linien vorgesehen, wobei die Linien der ersten Gruppe parallel zueinander und in einem ersten Winkel zur Umfangsrichtung und in einem Winkel zur Längsachse des Grundkörpers verlaufen und die Linien der zweiten Gruppe parallel zueinander und in einem zweiten Winkel zur Umfangsrichtung und in einem Winkel zur Längsachse des Grundkörpers verlaufen, wobei ein einer besonders bevorzugten Ausführungsform eine Linie der ersten Gruppe eine Linie der zweiten Gruppe schneidet und die Linie der ersten Gruppe im Schnittpunkt im Winkel von 90° zur Linie der zweiten Gruppe verläuft.

In einer bevorzugten Ausführungsform ist ein erster Sensor mit einem ersten radialen Abstand zur Längsachse des Messrollenkörpers angeordnet und ein zweiter Sensor mit einem zweiten, vom ersten unterschiedlichen Abstand zur Längsachse angeordnet. Die Sensoren können mithin in unterschiedlichen Ebenen angeordnet sein. Das Anordnen der Sensoren in unterschiedlichen Ebenen kann unterschiedliche, miteinander kombinierbare Vorteile bringen, beispielsweise

1. im Sinne einer Messbereichserweiterung. Es könnte ein sensibler und ein gröberer Sensor übereinander angeordnet werden. Bei kleineren Druckkräften ließe sich das Messsignal aus dem sensibleren Sensor ablesen. Nimmt die Druckkraft weiter zu, gelangt dieser Sensor an seine Bereichsgrenze. Nun könnte der gröbere Sensor für die weiter erhöhten Druckkräfte übernehmen.

2. ist eine Anordnung unterschiedlicher Sensoren auf unterschiedlichen Ebenen aus Platzgründen sinnvoll. So könnten Temperatursensoren und Drucksensoren übereinander angeordnet werden.

3. Denkbar sind zusätzliche Drucksensoren in anderen Ebenen, die nicht radiale Druckkräfte, sondern laterale Kräfte registrieren. Wird ein welliges Band um einen Rollenkörper gelenkt, entstehen Reaktionskräfte in lateraler Richtung. Sensoren, die verschiedene Kraftrichtungen registrieren, können übereinander angebracht werden.

4. Gegebenenfalls ist die Streuung einzelner Sensoren zu hoch. Der resultierende Messfehler ließe sich durch das Übereinanderstapeln (Inreiheschalten) einzelner Sensoren zu einem Gesamtsensor reduzieren.

In einer bevorzugten Ausführungsform ist die Mehrzahl (mehr als 50%) der in dem Segment angeordneten Sensoren, insbesondere bevorzugt die überwiegende Mehrzahl (mehr 75%) der in dem Segment angeordneten Sensoren und sind insbesondere bevorzugt alle in dem Segment vorhandenen Sensoren mit dem gleichen radialen Abstand zur Längsachse des Messrollenkörpers angeordnet.

In einer bevorzugten Ausführungsform weist der Grundkörper der Messrolle ein erstes Ende mit einem Lagerzapfen und ein zweites Ende mit einem Lagerzapfen auf, wobei die Lagerzapfen des Grundkörpers drehbar in Ständern der Messrolle gelagert sind, beispielsweise in Kugellagern.

In einer bevorzugten Ausführungsform ist der Grundkörper der Messrolle zylinderförmig ausgeführt.

Unter einer Vollrolle wird ein Grundkörper verstanden, der einstückig ist und dessen Form entweder mit einem Urformverfahren, beispielsweise Gießen, hergestellt wurde und/oder dessen geometrische Formen durch Trennverfahren, insbesondere durch Zerspanen, insbesondere durch Drehen, Bohren, Fräsen oder Schleifen aus einem einstückigen Halbzeug hergestellt wird. Es ist auch denkbar, dass der Grundkörper selbst aus einem Schichtauftrag hergestellt wird und der Grundkörper selbst, beispielsweise durch eines der in dieser Beschreibung beschriebenen Verfahren für die Schicht, beispielsweise durch ein 3-D-Druckverfahren, hergestellt wird.

In einer bevorzugten Ausführungsform sind bei einem solchen als Vollrolle ausgebildeten Grundkörper auch die jeweils stirnseitig an der Messrolle angeordneten Messrollenzapfen zur drehbaren Lagerung in der Messrolle, beispielsweise in Kugellagern, Teile des einstückigen Grundkörpers. Es sind jedoch auch Bauformen, wie sie beispielsweise in Figur 2 der DE 20 2014 006 820 U1 dargestellt werden, denkbar, bei denen der Hauptteil des Grundkörpers als zylinderförmige Vollrolle ausgeführt wird, die stirnseits angeordnete Deckel aufweist, an denen die Messrollenzapfen ausgeführt sind.

In einer bevorzugten Ausführungsform weist der Grundkörper eine geschlossene Umfangsfläche auf. In einer bevorzugten Ausführungsform ist die Umfangsfläche des Grundkörpers bis auf einen oder mehrere in das Innere des Grundkörpers führende Kanäle zur Aufnahme von Kabeln geschlossen ausgeführt. In einer bevorzugten Ausführungsform sind in den Kanälen keine Kraftsensoren angeordnet. Der Grundkörper kann stirnseitig durch eine Stirnseite abgeschlossen sein, wobei in der Stirnseite mindestens eine Kabeldurchführung bzw. ein Kabelkanal vorgesehen sein kann. Es kann vorgesehen sein, dass außer der Kabeldurchführung bzw. dem Kabelkanal keine weitere Öffnung in der Stirnseite des Grundkörpers vorhanden ist. In einer bevorzugten Ausführungsform sind die Stirnseiten des Grundkörpers im Winkel von 90° zur Umfangsfläche des Grundkörpers angeordnet.

Der Grundkörper kann mit einer oder mehreren Vorrichtungen verbunden werden, die seine drehbare Lagerung ermöglichen. In einer bevorzugten Ausführungsform weist die Messrolle, insbesondere der Grundkörper der Messrolle, Lagerzapfen auf.

Erfindungsgemäß weist die Messrolle eine Mehrzahl von Sensoren auf. In einer bevorzugten Ausführungsform ist die Mehrzahl (mehr als 50%) der in dem Segment angeordneten Sensoren, insbesondere bevorzugt die überwiegende Mehrzahl (mehr 75%) der in dem Segment angeordneten Sensoren und sind insbesondere bevorzugt alle in dem Segment vorhandenen Sensoren, die die gleiche Eigenschaft messen, beispielsweise eine Kraft oder eine Temperatur oder eine chemische Zusammensetzung.

In einer bevorzugten Ausführungsform ist die Mehrzahl (mehr als 50%) der in dem Segment angeordneten Sensoren, insbesondere bevorzugt die überwiegende Mehrzahl (mehr 75%) der in dem Segment angeordneten Sensoren und sind insbesondere bevorzugt alle in dem Segment vorhandenen Sensoren Kraftsensoren. Der Begriff "Kraftsensor" im Sinn der Beschreibung umfasst einen Sensor, der eine Sensorfläche aufweist, und derart ausgeführt ist, dass er bei einer Änderung der Lage der Sensorfläche ein Sensorsignal erzeugen kann.

Ein Kraftsensor im Sinne der Beschreibung weist meist ein ihm zugehöriges Bezugssystem auf und reagiert auf Änderungen der Lage der Sensorfläche in diesem Bezugssystem. Der Kraftsensor kann ein Gehäuse aufweisen. Das Bezugssystem ist dann häufig das Gehäuse. Der Kraftsensor kann bei einer Ausführungsform mit Gehäuse beispielsweise feststellen, ob sich die Lage der Sensorfläche relativ zu dem Gehäuse geändert hat. Ist der Kraftsensor beispielsweise als piezoelektrischer Kraftsensor ausgeführt, so weist er einen Piezo-Quarz auf, der ein elektrisches Signal erzeugen kann, wenn die Lage einer seiner Oberflächen relativ zu einer Bezugsfläche, beispielsweise einer gegenüberliegenden Oberfläche des Piezo-Quarzes, geändert wird, demnach der Piezo-Quarz beispielsweise zusammengedrückt wird. Bei einem als Dehnungsmessstreifen ausgeführten Kraftsensor wird durch eine Lageänderung der Oberfläche des Kraftsensors die Länge des Messdrahts bzw. des aus Messdrähten gebildeten Messgitters geändert, meist gestreckt, beispielsweise auch gestaucht. Bei einem als optischen Kraftsensor ausgestalteten Kraftsensor werden die optischen Eigenschaften des Kraftsensors, beispielsweise der Brechungsindex oder Reflexionseigenschaften, durch die Lageänderung der Oberfläche geändert.

In der Schicht können 3D-Druck-Strukturen, die ihrerseits Dehnmessstreifen oder ähnliche Strukturen enthalten, untergebracht sein.

In einer bevorzugten Ausführungsform ist die Mehrzahl (mehr als 50%) der in dem Segment angeordneten Sensoren, insbesondere bevorzugt die überwiegende Mehrzahl (mehr 75%) der in dem Segment angeordneten Sensoren und sind insbesondere bevorzugt alle in dem Segment vorhandenen Sensoren durch

- 3D-Druck
- Aufdampfen
- SMD-Bestückung
- Lackieren

erzeugt.

Als Sensor, der durch SMD-Bestückung erzeugt wird, kann beispielsweise der unter diesem Link dargestellte Sensor eingesetzt werden:

https://www.digikey.de/product-detail/de/honeywell-sensing-and-productivitysolutions/FMAMSDXX025WCSC3/480-FMAMSDXX025WCSC3CT-ND/12088280

Derartige Sensoren können werksseitig kalibriert und intern temperaturkompensiert sein. Das Messsignal wird über I2C- oder SPI-Bus bereitgestellt. Beispielsweise können beim I2C-Bus mehrere Master und bis zu 128 Slaves beteiligt sein. So können jeweils 128 Sensoren zusammengefasst und einer Sammelplatine, hier als Kanalmodul bezeichnet, zugeführt werden. Von dort aus kann gleichfalls die Versorgungsspannung bereitgestellt werden. Die zusammengefassten Sensorsignale werden an eine Hauptplatine, die sich ebenfalls auf der Rolle befindet und hier als Gruppenmodul bezeichnet wird, weitergeleitet. Die Übertragung vom Gruppenmodul auf der Rolle zum Auswertemodul außerhalb der Rolle kann mittels Funkverbindung oder optisch erfolgen.

Für einen Messbereich von 1270mm über der Breite wäre bei einem Abstand von 10mm von Sensor zu Sensor eine Zeile mit 128 Sensoren zu realisieren. Für jeweils N Zeilen über den Rollenumfang sind entsprechende Kanalmodule unterzubringen. Für einen Rollenumfang von 1m wären bei einem Sensorabstand von 10mm in Umfangsrichtung M=100/N Kanalmodule zu installieren. Diese würden vom Gruppenmodul entsprechend aufgenommen, weiterverarbeitet und weitergeleitet werden. Die Messrolle verfügt in diesem Beispiel über 12800 Einzelsensoren. Die Kanalmodule und das Gruppenmodul können auf den Stirnseiten der Rolle untergebracht werden. Das Gruppenmodul muss nicht zwingend die hier im Beispiel genannten 100 Kanäle gleichzeitig aufnehmen, sondern braucht zu jedem Zeitpunkt immer nur die gerade beaufschlagten Sensorzeilen zu verarbeiten. Dies kann durch eine flexible Umschaltung (ähnlich Multiplexer) realisiert werden. Gleiches gilt für die Kanalmodule. Belegt das Band in Breitenrichtung nur einen Teil des Messbereiches, ist eine Reduktion der weiterzuleitenden Sensorsignale zweckmäßig. Mit jeder Abtastung liegt eine bildhafte Information über die Druckverteilung zwischen Messgut und Rolle vor. Diese Information wird in der Auswertung mit jedem Abtastschritt fortgeschrieben und es können die gesuchten Qualitätsgrößen für die Bandplanheit ermittelt werden.

Auf dem Rollenkörper kann eine Isolierschicht aufgebracht sein und in oder auf dieser Schicht befinden sich die Leitungsverbindungen mit den Pads zur Kontaktierung der Drucksensoren. Die Drucksensoren befinden sich auf der Isolierschicht und deren Pins sind mit den Pads der Leiterbahnen verbunden. Die Drucksensoren sind von einer kompressiblen Schicht umgeben, nur die Druckkugeln befinden sich im elastischen Außenmantel, vorzugsweise aus Stahl. Die vom Band auf den Außenmantel wirkende Druckkraft wirkt zu einem großen Anteil unmittelbar auf die Kraftsensoren. Ein Verspannen der Sensoren ist nicht erforderlich.

In einer bevorzugten Ausführungsform wird der Sensor mittels additiver Technik aufgebracht, wobei alternativ eine Bestückung mit fertigen passiven Sensoren ebenfalls möglich ist.

In dieser Variante werden entweder Drucksensoren mit Analogausgang bestückt oder mittels additivem Verfahren aufgebracht - also hergestellt. Jeder Sensor wird mit einer "horizontalen" und einer "vertikalen" elektrisch leitenden Verbindung kontaktiert. So entsteht eine Matrixstruktur. Für eine quadratische Matrix mit 10x10 Sensoren sind entsprechend 20 Leitungen auszuwerten. Mittels zweier Multiplexer für horizontale und vertikale Leitungen können die einzelnen Messwerte ausgelesen, verstärkt und ADgewandelt werden. Diese Elektronik kann entweder an der Stirnseite der Rolle, oder zur Vermeidung zusätzlicher Leitungswege zwischen den Sensoren platziert werden. Denkbar ist auch eine zusätzliche Schicht unterhalb der Sensoren. Die einzelnen Kanäle werden über einen Bus (z.B. I2C oder SPC) an Gruppenmodule übertragen. Die Gruppenmodule können an der Stirnseite der Rolle oder innerhalb der Rolle untergebracht werden.

Die Kraftsensoren können aus Widerständen, Kapazitäten, Induktivitäten, Spannungselementen, Piezo-Sensoren sowie Hallschaltkreise oder anderen Halbleitern abgeleitet werden.

In einer bevorzugten Ausführungsform wird der Sensor als aktiver Sensor mit Analogausgang ausgeführt. Ein solcher Sensor wird beispielsweise unter diesem Link näher beschrieben:

https://www.digikey.de/product-detail/de/honeywell-sensing-and-productivitysolutions/FSS020WNSB/480-6894-ND/6605549

In der Schicht können alternativ auch aktive Sensoren mit Analogausgang untergebracht werden.

In einer bevorzugten Ausführungsform wird ein additiv hergestellter oder diskret eingebauter Sensor verspannt, nämlich eingebettet in einer kompressiblen Schicht.

In einer bevorzugten Ausführungsform ist eine Schicht, in der ein Sensor angeordnet ist, eine einzelne Schicht und Teil eines Schichtsystems. Jede Schicht kann eine oder mehrere spezifische Aufgaben übernehmen. Mögliche Aufgaben sind beispielsweise:

- Isolieren

- Einbetten
- Mechanisches Verbinden
- Elektrisches Verbinden
- Sensorik (Druck, Temperatur, Feuchte, Leifähigkeit, US-basiert, elektromagnetisch, elektrostatisch)
- Signalverarbeitung.

In einer bevorzugten Ausführungsform sind die Sensoren auf einem Raster verteilt, (evtl. getrennt von der Rolle vorarrangiert), verdrahtet und fixiert. Die Zwischenräume zwischen den Sensoren und evtl. eine dünne Schicht über den Sensoren werden beispielsweise mit Harz (z.B. Epoxy), Gummi (z.B. Gummi), Keramik (z.B. via Sol-Gel) etc./o.ä. ausgegossen. Ergänzend kann das Aufziehen einer Stahlhülse oder das Einsetzen der Sensoren in eine innen mit dafür vorgesehenen Ausnehmungen versehenen Stahlhülse (evtl. Ausgießen mit einem Fixiermaterial (Harz, Gummi o.ä.)) und Aufziehen auf den Stahlkern vorgesehen sein.

In einer bevorzugten Ausführungsform erfolgt eine Herstellung einer fest mit dem Rollengrundkörper verbindbaren (z.B. durch Löten oder Kleben) Druckmessfolie z.B. durch Abscheidung piezoresistiver Dünnschichten und Aufbringen dieser auf einen separat gefertigten Rollengrundkörper. Ebenso ist die Applikation eines Schichtsystems wie die Druckmessfolie direkt auf dem Rollengrundkörper mit einer Isolierschicht (z.B. Sol-Gel, PVD/CVD, Lack) denkbar.

In einer bevorzugten Ausführungsform werden die Schicht und ein in der Schicht vorgesehener Sensor unter Einsatz eines oder mehrere der nachstehenden Produktionsschritte hergestellt:

- 3-D gedruckte Sensorstrukturen ausgegossen oder überschichtet mit Isolier-/ Schutzmaterial (z.B. Gummi, Harz, PVD/CVD, SolGel, Spritzkeramik)
- Multi-Material-3D-Druck auf rotierender Rolle, abwechselnder Auftrag von Sensormaterial + Isolier-/ Schutzmaterial, CAD gesteuert, lagenweiser Aufbau
- Photolithografische Maskierung → Abscheidung Sensorstruktur (z.B. per PVD/CVD, galvanisch, chemisch) → Überschichten mit Isolier-/ Schutzschicht
- Evtl. einer weiteren Schutzschicht gegen Verschleiß

Geeignete Materialien für die Abscheidung von Kraftmesssensoren per 3D-Druck oder PVD/CVD sind

- Piezoelektrische Keramiken, z.B. **PZT,** ZnO, AlN,
- Legierungen z.B, PdCr, CuNi (siehe Literatur)
- Amorphe DLC-Schichten
- Geeignete Materialien für die Abscheidung von Kraftmesssensoren per 3D-Druck oder PVD/CVD
- Jede Standard-Thermocouple-Kombination, z.B. Typ R: PtRh vs.Pt.

In einer bevorzugten Ausführungsform ist die Schicht eine Schicht, die in einem Schichtauftrag hergestellt wurde. In einer bevorzugten Ausführungsform weist die erfindungsgemäße Messrolle mehrere Schichten auf, die in einem Schichtauftrag hergestellt wurden, wobei erfindungsgemäß in einer oder mehrerer der Schichten der Sensor angeordnet ist.

Ein "Schichtauftrag" im Sinne der Beschreibung umfasst einen Materialauftrag, mittels dem eine Schicht, insbesondere aus Metall, zunächst punktweise, linienweise bzw. spaltenweise und/oder rasterweise aufgetragen werden kann, um ein dreidimensionales Objekt in Form einer Schicht bzw. mehrerer Schichten übereinander auszubilden. Beim Schichtauftrag kann die Schicht, die momentan aufgetragen wird, mit einer darunterliegenden Schicht oder dem Grundkörper, sofern die Schicht die erste ist, die auf den Grundkörper aufgetragen wird, fest verbunden werden. Der Materialauftrag kann schichtweise computergesteuert aus einem oder mehreren flüssigen oder festen Werkstoffen nach vorgegebenen Maßen und Formen erfolgen. Beim Materialauftrag können physikalische oder chemische Härtungs- oder Schmelzprozesse stattfinden. Mittels des Schichtauftrags kann eine geschlossene im Wesentlichen glatte Oberfläche erzeugt werden. Der Schichtauftrag kann aus einer einzigen Schicht bestehen. Eine einzige Schicht kann dadurch erzeugt werden, dass sie einmal punktweise, linienweise bzw. spaltenweise und/oder rasterweise aufgetragen wird. Bei einem solchen Aufbau wird auf einer einmal erzeugten ersten Schicht keine weitere Schicht punktweise, linienweise bzw. spaltenweise und/oder rasterweise aufgetragen. In einer bevorzugten Ausführungsform besteht der Schichtaufbau jedoch aus mehreren Schichten, die vorzugsweise nacheinander hergestellt wurden.

Es sind ferner Ausführungsformen denkbar, bei denen die Schicht, in der der Kraftsensor angeordnet ist, durch mehrere "Schichten", die zur begrifflichen Differenzierung als Unterschichten bezeichnet werden, gebildet wird. Die jeweilige Unterschicht kann dadurch erzeugt werden, dass sie einmal punktweise, linienweise bzw. spaltenweise und/oder rasterweise aufgetragen wird.

Unter "punktweise" wird das Aufbringen einer Schicht bzw. eines Teils einer Schicht mit einem Arbeitsgang verstanden, der keine Relativbewegungen entlang der Umfangsfläche des Grundkörpers beinhaltet. Der Begriff "punktweise" ist nicht als eine Beschränkung der Größe der Schicht bzw. des Teils der Schicht, die bzw. der mit diesem Arbeitsgang aufgebracht wird, zu verstehen. "Punktweise" kann auch das Auftragen einer großflächigen Schicht bzw. eines großflächigen Teils einer Schicht bedeuten, solange dieser Arbeitsschritt ohne Relativbewegungen entlang der Umfangsfläche des Grundkörpers möglich ist.

In einer bevorzugten Ausführungsform ist der Schichtauftrag mittels

- eines Druckens durch einen 3D-Drucker,
- ein Laserstrahlschmelzen (LBM),
- ein Elektronenstrahlschmelzen (EBM),
- ein Laser-Pulverauftragsschweißen,

- ein Lichtbogenschweißen mit Drahtvorschub,
- ein thermisches Spritzen,
- ein Auftragsschweißen,
- ein Drahtlaserauftragsschweißen,
- ein Pulverbettverfahren, insbesondere bevorzugt das sog. "Selectiv Laser Sintering" (SLS) oder das sog. "Selective Laser Melting" (SLM),
- das Laser Metal Deposition (LMD),
- das Extremhochgeschwindigkeitslaserauftragsschweißen (EHLA) und/oder
- ein Auftragslöten gebildet.

Hierdurch ist ein Schichtauftrag mittels einer additiven Fertigung auf Basis von 3D-Modellen möglich. Sofern Beispiele für die Fertigung des Schichtauftrags genannt werden, so umfasst diese additive Fertigung auf Basis von 3D-Modellen

- einen Freistrahl-Bindemittelauftrag,
- einen Materialauftrag mit gerichteter Energieeinbringung,
- eine Materialextrusion,
- einen Freistrahl-Materialauftrag,
- ein pulverbettbasiertes Schmelzen,
- eine Schichtlaminierung,
- eine badbasierte Fotopolymerisation und
- Kombinationen der vorgenannten Verfahren.

Die genannten Verfahren bieten den Vorteil, dass eine Materialzuführung für den Schichtauftrag mit Hilfe von Linearachsen oder einem Roboter über den Grundkörper bewegt werden kann. Hierbei kann ein Materialmix oder im Wesentlichen ein reines Material verwendet werden. Die Erzeugung einer Schmelze ist möglich. Insbesondere kann mittels des Laser- oder Elektronenstrahls eine Schmelze des zugeführten Materials erzeugt werden, die auf dem Grundkörper bzw. auf über dem Grundkörper schon vorliegenden Schichten aufgetragen werden. Es kann vorgesehen sein, dass das Material zum Schichtauftrag als Pulver mit einem Schutzgasstrom oder mittels Drahtvorschub in den Bereich gefördert wird, in dem eine Materialschmelze erzeugt wird. Insbesondere kann mittels der genannten Verfahren ein Fügeprinzip durchgeführt werden, welches insbesondere ein Schmelzschweißen ist. Ein Stoffschluss ist hierdurch möglich.

Der Schichtauftrag im Sinne der Beschreibung kann in einer bevorzugten Ausführungsform insbesondere dadurch ausgezeichnet sein, dass die in der Beschreibung genannten Verfahren durch Ansteuerung mit 3D-Daten in entsprechend ausgestalteten Anlagen als 3D-Druckverfahren eingesetzt werden.

In einer bevorzugten Ausführungsform ist die erste bzw. soweit nur eine einzige Schicht vorhanden ist, die einzige Schicht des Schichtauftrags mit dem Grundkörper verbunden, so dass eine stabile Verbindung zwischen dem Grundkörper und dem Schichtauftrag vorliegen kann. Die Verbindung kann durch einen der folgenden Wirkmechanismen oder durch eine Kombination der folgenden Wirkmechanismen erzielt werden: Mechanische Verklammerung auf der molekularen Ebene, Adhäsion, Diffusionsvorgänge, Oberflächenenergie und/oder elektrostatische Kräfte. Mittels eines Schweißens ist eine stabile Fügeverbindung zwischen dem Schichtauftrag, hier der ersten Schicht über dem Grundkörper, möglich.

In einer bevorzugten Ausführungsform sind zumindest einige der Schichten (soweit der Schichtauftrag mehrere Schichten aufweist) des Schichtauftrags miteinander verbunden, insbesondere verschweißt, so dass auch eine stabile Verbindung des Schichtauftrags selbst möglich ist. Hierdurch kann verhindert werden, dass bei einer thermisch induzierten Veränderung der Messrollengeometrie ein Ablösen stattfindet.

In einer bevorzugten Ausführungsform weist der Schichtauftrag mindestens ein schweißgeeignetes Metall, mindestens eine schweißgeeignete Legierung und/oder keramische Verstärkungspartikel auf. Durch eine geeignete Wahl des Materials für den Schichtauftrag kann den Anforderungen an die Messrolle entsprochen werden und/oder eine gute thermische Stabilität bei gleichzeitig guten Herstellungsmöglichkeiten berücksichtigt werden. Insbesondere bevorzugt sind Metalle mit hoher Festigkeit und Zähigkeit. Insbesondere bevorzugt sind Eisen, Kobalt, Nickel, Chrom, Molybdän, Vanadium und deren Legierungen, beispielsweise eine Chrom-Molybdän-Legierung (CrMo), beispielsweise 42CrMo4, oder eine Chrom-Molybdän-Vanadium-Legierung (CrMoVa), beispielsweise 86CrMoV7 oder beispielsweise eine Wolfram-Nickel-Chrom-Legierung (WCNiCr).

In einer bevorzugten Ausführungsform weist der Schichtauftrag Schichten unterschiedlicher Zusammensetzung übereinander auf, so dass unterschiedliche Anforderungen an die Schichten hinsichtlich ihrer Lage am Grundkörper berücksichtigt werden können.

In einer bevorzugten Ausführungsform werden die Schichten eines gemäß einer bevorzugten Ausführungsform mehrschichtigen Schichtaufbaus auf gleiche Weise hergestellt. Es sind aber auch Ausführungsformen denkbar, bei denen die Schichten eines gemäß einer bevorzugten Ausführungsform mehrschichtigen Schichtaufbaus durch unterschiedliche Herstellungsmethoden erzeugt werden bzw. eine Gruppe von ersten Schichten nach einem ersten und eine Gruppe von zweiten Schichten nach einem zweiten Herstellungsverfahren hergestellt werden. Ein derartiger Ansatz bietet sich insbesondere dann an, wenn die Schichten verschiedenartig sind, beispielsweise aus verschiedenen Materialien hergestellt werden und sich das jeweils eine Herstellungsverfahren besonders gut für das Erzeugen einer ersten Schicht eignet, während ein anderes Herstellungsverfahren sich besonders gut für das Erzeugen einer zweiten, im Verhältnis zur ersten Schicht andersartigen Schicht eignet. Beispielsweise ist es denkbar, mit einem ersten Herstellungsverfahren eine Schicht aufzutragen, deren Material dem des Grundkörpers entspricht oder zumindest gleichartig, beispielsweise metallisch ist, während mit einem anderen Herstellungsverfahren als weitere Schicht des Schichtaufbaus eine Schutzschicht aufgetragen wird, beispielsweise eine Kunststoffschicht oder eine Gummischicht aufgetragen wird. Es ist auch denkbar, eine Schutzschicht aus Wolframcarbid als äußerste Schicht aufzutragen.

In einer bevorzugten Ausführungsform ist bei Ausführungsformen, bei denen der Schichtaufbau nur eine Schicht aufweist, die einzige Schicht des Schichtaufbaus aus einem metallischen Material oder aus einem keramischen Material. In einer bevorzugten Ausführungsform ist bei Ausführungsformen, bei denen der Schichtaufbau mehrere Schichten aufweist, die Schicht des Schichtaufbaus, die dem Grundkörper am nächsten ist (die unterste Schicht; die innerste Schicht) aus einem metallischen Material oder aus einem keramischen Material.

In einer bevorzugten Ausführungsform ist bei Ausführungsformen, bei denen der Schichtaufbau nur eine Schicht aufweist die einzige Schicht des Schichtaufbaus bzw. bei Ausführungsformen, bei denen der Schichtaufbau mehrere Schichten aufweist zumindest die Schicht des Schichtaufbaus, die dem Grundkörper am nächsten ist (die unterste Schicht; die innerste Schicht), hinsichtlich seiner Materialeigenschaften, insbesondere hinsichtlich des Ausdehnungskoeffizienten und/oder hinsichtlich der Festigkeit auf das Material des Grundkörpers abgestimmt. Insbesondere bevorzugt ist bei Ausführungsformen, bei denen der Schichtaufbau nur eine Schicht aufweist, bei der einzigen Schicht des Schichtaufbaus bzw. bei Ausführungsformen, bei denen der Schichtaufbau mehrere Schichten aufweist, zumindest bei der Schicht des Schichtaufbaus, die dem Grundkörper am nächsten ist (die unterste Schicht; die innerste Schicht),

- das Material so gewählt, dass der in $10^{-6}$/K gemessene Ausdehnungskoeffizient des Materials nicht weniger als das 0,5fache, insbesondere bevorzugt nicht weniger als das 0,6fache, insbesondere bevorzugt nicht weniger als das 0,7fache, insbesondere bevorzugt nicht weniger als das 0,8fache, insbesondere bevorzugt nicht weniger als das 0,9fache des in $10^{-6}$/K gemessenen Ausdehnungskoeffizient des Materials des Grundkörpers ist (ist der Grundkörper aus Stahl, so liegt der in $10^{-6}$/K gemessene Ausdehnungskoeffizient in etwa im Bereich von 11 bis 13 $10^{-6}$/K; das Material der einzigen bzw. der untersten/innersten Schicht sollte in einer bevorzugten Ausführungsform dann einen in $10^{-6}$/K gemessenen Ausdehnungskoeffizient haben, der nicht unter 5,5 $10^{-6}$/K (dem 0,5fachen von 11) liegt, und/oder
- das Material so gewählt, dass der in $10^{-6}$/K gemessene Ausdehnungskoeffizient des Materials nicht weniger 9 $10^{-6}$/K, vorzugsweise nicht weniger als 10 $10^{-6}$/K beträgt, und/oder

- das Material so gewählt, dass die in MPa gemessene Zugfestigkeit des Materials nicht weniger als das 0,7fache, insbesondere bevorzugt nicht weniger als das 0,8fache, insbesondere bevorzugt nicht weniger als das 0,9fache der in MPa gemessenen Zugfestigkeit des Materials des Grundkörpers ist (ist der Grundkörper aus Stahl, so liegt die MPa gemessene Zugfestigkeit in etwa im Bereich von 700 bis 1100 MPa; das Material der einzigen bzw. der untersten/innersten Schicht sollte in einer bevorzugten Ausführungsform dann eine in MPa gemessene Zugfestigkeit haben, die nicht unter 490 MPa (dem 0,7fachen von 700) liegt, und/oder
- das Material so gewählt, dass die in MPa gemessene Zugfestigkeit des Materials nicht weniger als 600 MPa, vorzugsweise nicht weniger als 650 MPa beträgt.

Dabei beziehen sich die vorstehend genannten Materialeigenschaften auf die Schicht im aufgetragenen Zustand. Mit den vorstehend wiedergegebenen Auslegungsregeln für das Material der Schicht im auf den Grundkörper aufgebrachten Zustand kann erreicht werden, dass die Schicht - insbesondere im Bereich der Ausnehmung - nicht brüchig wird oder abplatzt.

Es sind Ausführungsformen denkbar, bei denen die Schichten eines gemäß einer bevorzugten Ausführungsform mehrschichtigen Schichtaufbaus eine unterschiedliche Erstreckung aufweisen. Beispielsweise ist es denkbar, dass ein Grundkörper eine Senke um die Ausnehmung herum aufweist, die durch Auftragen einer ersten Schicht bzw. einer ersten Gruppe von Schichten gefüllt wird. Diese erste Schicht bzw. diese erste Gruppe von Schichten hat dann die geometrische Form der Senke. Aufbauend auf dieser ersten Schicht bzw. dieser ersten Gruppe von Schichten kann der Schichtaufbau dann eine zweite Schicht oder eine zweite Gruppe von Schichten aufweisen, die eine größere Erstreckung als die Senke haben, beispielsweise die gesamte verbleibende Umfangsfläche des Grundkörpers inkl. der Umfangsfläche der mit der ersten Schicht/der ersten Gruppe von Schichten gefüllten Senke abdecken.

Der Schichtauftrag kann in einer bevorzugten Ausführungsform zur Anbindung an den Grundkörper das gleiche Material wie der Grundkörper aufweisen. Es kann vorgesehen sein, dass sich in der Höhe des Schichtauftrags das Material ändert, um unterschiedlichen Anforderungen gerecht zu werden.

Die Folie bzw. die Matte kann eine Druckfolie sein.

Die Folie und/oder die Matte kann als Kraftsensoren eine Matrix von Sensoren auf piezoresistiver Basis aufweisen, die als dünne Matten in eine Ummantelung eingebracht werden können.

Wird ein Rollenkörper mit einer Druckmessfolie umwickelt, kann die Druckverteilung an dessen Mantelfläche gemessen werden. Läuft ein Band über dem Rollenkörper ab, wird in der Folie eine Druckverteilung registriert. Ist das Band plan, wird sich die Druckverteilung gleichmäßig ausbreiten. Ist das Band unplan, werden höhere Drücke in kürzeren Bandfasern und geringere Drücke in längeren Bandfasern gemessen.

Die Druckmessfolie kann sich unterhalb einer weiteren Schicht, insbesondere einer Schutzschicht befinden, die beispielsweise aus Gummi, Keramik, Stahl oder Polyurethan hergestellt sein kann.

Die Folie oder die Matte kann auch dadurch hergestellt werden, dass an der Unterseite der Schicht (an der dem Grundkörper zugewandten Seite) Elektroden o. ä. untergebracht werden. Jede Elektrode bildet mit dem über die Messrolle laufenden bandfähigen Gut eine Kapazität. Das Material der Schicht kann dabei als Dielektrikum dienen, beispielsweise eine Gummischicht. Die Kapazität erhöht sich mit zunehmendem Druck, weil der Abstand zwischen Elektrode und dem Band geringer wird. Die Beschichtung kann auch durch eine andere flexible Isolations- oder Dielektrikum-Schicht gestellt werden, beispielsweise durch eine Keramik.

Bei einem mit der erfindungsgemäßen Messrolle durchzuführenden Verfahren können die Messwerte der Sensoren vorverarbeitet, komprimiert und in gleicher oder ähnlicher Weise, wie bei der Übertragung von Bildern, transportiert werden.

Die Datenübertragung von der Messrolle zu einer stationären Auswerteeinheit außerhalb der Messrolle kann mittels elektromagnetischer Wellen erfolgen. Es kann ein optisch arbeitender Drehübertrager oder eine Funkverbindung eingesetzt werden.

Eine Kalibrierung der Messrolle kann durch werkseitiges Abrollen auf einer Planebene erfolgen. Im eingebauten Zustand könnte dies temporär durch eine Gegenrolle erreicht werden. Während des Betriebs kann eine Messung des Gesamtbandzugs über Drucksensoren in den Lagerböcken zur Korrektur der Messwerte der Matrix herangezogen werden.

Die Schicht muss nicht zwingend als Folie oder Matte ausgeführt sein. Es kann sich bei der Schicht auch um eine auf den Grundkörper der Messrolle aufgebrachte Schicht handeln, die mittels 3D-Druck, photochemisch, Spritz- oder mittels eines Farbaufdrucks erzeugt wird. Beispielsweise sind aus der Gasphase abgeschiedenen Schichten (PVD; DLC) denkbar.

In der Schicht kann zusätzlich ein Temperatursensor angeordnet sein. Das Einbringen eines Temperatursensors ermöglicht eine Temperaturkompensation. In einer bevorzugten Ausführungsform ist es denkbar, das Temperaturprofil in gleicher Auflösung wie die Druckverteilung zu ermitteln und zu übertragen.

In einer bevorzugten Ausführungsform wird die erfindungsgemäße Messrolle zum Feststellen der Planheit des über die Messrolle geführten bandförmigen Guts eingesetzt. Ergänzend oder alternativ kann mittels der erfindungsgemäßen Messrolle der Querbogen oder der Bandverlauf ermittelt werden. Ebenso können Bandrisse an der Bandkante oder Fehlstellen im Band detektiert werden. Ferner können Fehler der Bandtopografie, wie beispielsweise Zundernarben, Schalen, Löcher detektiert werden. Wenn eine Gegenrolle verwendet wird, können auch Dickenschwankungen abgeleitet werden.

Bei einer Eigenschaft eines über die Messrolle geführten bandförmigen Guts kann es sich insbesondere um die Planheit des bandförmigen Guts handeln.

Das bandförmige Gut kann insbesondere ein Metallband sein, welches insbesondere beim Kalt- oder Warmwalzen des Metallbands über die Messrolle geführt werden kann. Die Messrolle kann auch in einer Weiterverarbeitungslinie angeordnet sein, wie z.B. Nachwalzgerüst (Dressiergerüst), Bandglühlinie, Verzinkungslinie oder Streck-Biege-Richtanlage.

Die Erfindung lässt sich in der Planheitsmessung und in der Topografiemessung, beispielsweise beim Bandwalzen, insbesondere von Stahlband, aber auch in anderen Industriezweigen, wie der Aluminiumherstellung, der Herstellung von Buntmetall, von Papier oder Kunststoff einsetzen.

Nachfolgend wird die Erfindung anhand von Zeichnungen erläutert, die lediglich Ausführungsbeispiele der Erfindung darstellen. Darin zeigen:

Fig. 1          eine schematische, perspektivische Ansicht des Systems;

Fig. 2          eine schematische, geschnittene perspektivische Ansicht einer Randschicht der Messrolle in abgewickelter Darstellung;

Fig. 3          eine schematische Darstellung einer Möglichkeit der Zusammenfassung von nx128 Sensorsignalen mittels Kanalmodul;

Fig. 4          eine schematische Darstellung einer Zusammenfassung von M Kanalmodulen mittels Gruppenmodul und Weiterleitung der Sensorsignale an ein Auswertemodul außerhalb der Messrolle;

Fig. 5          eine schematische, perspektivische Ansicht einer möglichen Realisierung des Sensoreinbaus;

Fig. 6          eine schematische Darstellung einer Möglichkeit einer Zusammenfassung von 100 analogen Sensorsignalen mittels Kanalmodul;

Fig. 7          eine schematische, perspektivische Ansicht einer möglichen Realisierung additiv hergestellter Sensoren;

Fig. 8a), b), c)  eine schematische, perspektivische Ansicht einer möglichen Realisierung einer Spannvorrichtung für Sensoren in einer Schicht, mit Fig. 8a) Schnitt durch die Messrolle, Fig. 8b) 3D-Ansicht und Fig. 8c) Ausschnitt mit Sensoren, eingebettet in kompressibler Schicht und

Fig. 9          eine schematische, perspektivische Ansicht einer Messrolle.

Das Stahlband 1 läuft mit einem Umschlingungswinkel um einen Rollenkörper 3, der mit einer drucksensitiven Beschichtung 2 ausgestattet ist. Energieübertragung und Signalübertragung (optisch oder Funk) wird bevorzugt in einem oder beiden Lagern realisiert. Ein Lagerzapfen 4 ist am Rollenkörper 3 vorgesehen. In den Lagern können Kraftmessungen realisiert sein, die der Erfassung des Gesamtbandzuges dienen (zum dynamischen Abgleich der Druckverteilung, Kompensation oder Störgrößen).

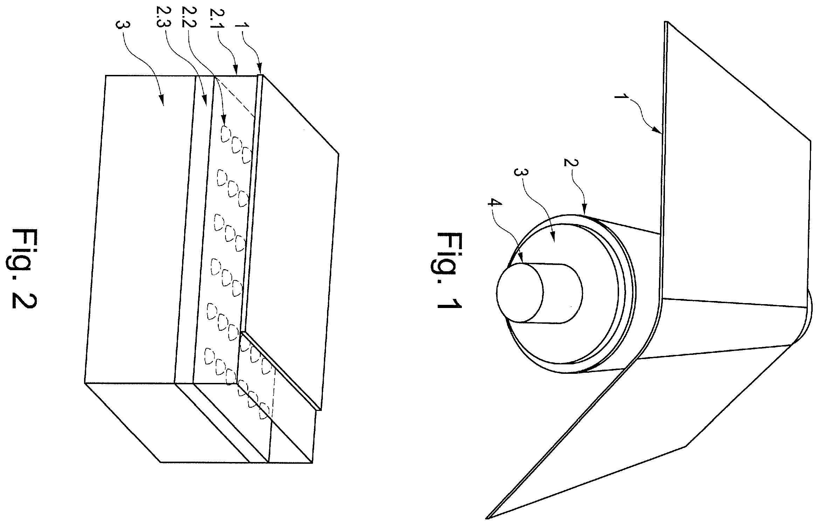

Fig. 2 enthält ein Beispiel für eine mögliche Ausführung einer drucksensitiven Schicht. Ein Teil der Schicht 2 kann aus nichtleitendem Gummi oder Keramik 2.1 bestehen und hat direkten Kontakt zum Band 1. Er wirkt als Dielektrikum zwischen einer Elektrodenmatrix 2.2 und dem Band. Die Kapazität von jeder Elektrode zum Band oder von der betreffenden Elektrode zu den umgebenden Elektroden kann gemessen werden. Die Kapazität verändert sich mit zunehmendem Druck. Aus den Einzelkapazitäten lässt sich die Druckverteilung bestimmen. Die Elektroden sind in einer Trägerschicht 2.3 eingebettet. Diese Schicht kann als flexible Leiterplatte ausgeführt sein. Die Leiterplatte kann sämtliche Elektronik zur Vorverarbeitung und zum Zusammenfassen der Einzelsignale durch Schieberegister/Multiplexer enthalten. Die gesamte Schicht kann alternativ additiv gefertigt werden. Das Messprinzip basiert nicht zwingend auf Kapazitätsmessungen.

Als Sensor, der durch SMD-Bestückung erzeugt wird, kann beispielsweise der unter diesem Link dargestellte Sensor eingesetzt werden:

https://www.digikey.de/product-detail/de/honeywell-sensing-and-productivitysolutions/
FMAMSDXX025WCSC3/
480-FMAMSDXX025WCSC3CT-ND/12088280

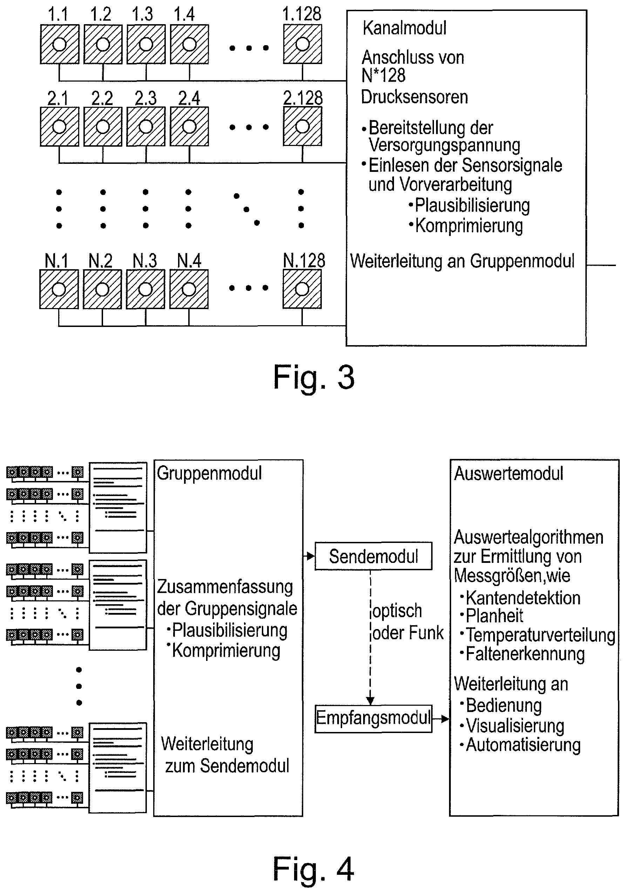

Derartige Sensoren können werksseitig kalibriert und intern temperaturkompensiert sein. Das Messsignal wird über I2C- oder SPI-Bus bereitgestellt. Beispielsweise können beim I2C-Bus mehrere Master und bis zu 128 Slaves beteiligt sein. So können jeweils 128 Sensoren zusammengefasst und einer Sammelplatine, hier als Kanalmodul bezeichnet, zugeführt werden. Von dort aus kann gleichfalls die Versorgungsspannung bereitgestellt werden (Fig. 3). Die zusammengefassten Sensorsignale werden an eine Hauptplatine, die sich ebenfalls auf der Rolle befindet und hier als Gruppenmodul bezeichnet wird, weitergeleitet (Fig. 4). Die Übertragung vom Gruppenmodul auf der Rolle zum Auswertemodul außerhalb der Rolle kann mittels Funkverbindung oder optisch erfolgen.

Für einen Messbereich von 1270mm über der Breite wäre bei einem Abstand von 10mm von Sensor zu Sensor eine Zeile mit 128 Sensoren zu realisieren. Für jeweils N Zeilen über dem Rollenumfang sind entsprechende Kanalmodule unterzubringen. Für einen Rollenumfang von 1m wären bei einem Sensorabstand von 10mm in Umfangsrichtung M=100/N Kanalmodule zu installieren. Diese würden vom Gruppenmodul entsprechend aufgenommen, weiterverarbeitet und weitergeleitet werden. Die Messrolle verfügt in diesem Beispiel über 12800 Einzelsensoren. Die Kanalmodule und das Gruppenmodul können auf den Stirnseiten der Rolle untergebracht werden. Das Gruppenmodul muss nicht zwingend die hier im Beispiel genannten 100 Kanäle gleichzeitig aufnehmen, sondern braucht zu jedem Zeitpunkt immer nur die gerade beaufschlagten Sensorzeilen zu verarbeiten. Dies kann durch eine flexible Umschaltung (ähnlich Multiplexer) realisiert werden. Gleiches gilt für die Kanalmodule. Belegt das Band in Breitenrichtung nur einen Teil des Messbereiches, ist eine Reduktion der weiterzuleitenden Sensorsignale zweckmäßig. Mit jeder Abtastung liegt eine bildhafte Information über die Druckverteilung zwischen Messgut und Rolle vor. Diese Information wird in der Auswertung mit jedem Abtastschritt fortgeschrieben und es können die gesuchten Qualitätsgrößen für die Bandplanheit ermittelt werden.

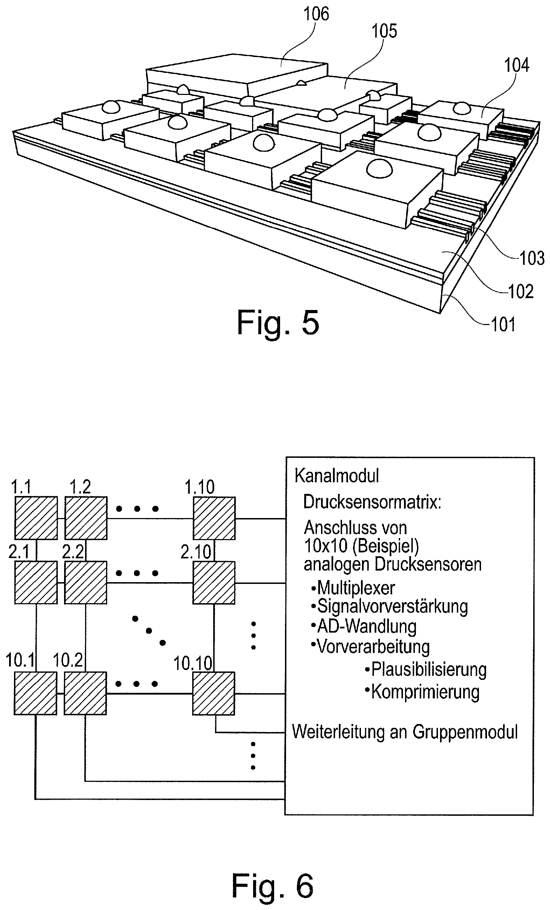

Fig. 5 zeigt den schematischen Aufbau einer Realisierung mit SMD-Drucksensoren. Auf dem Rollenkörper ist eine Isolierschicht aufgebracht und in oder auf dieser Schicht befinden sich die Leitungsverbindungen mit den Pads zur Kontaktierung der Drucksensoren. Die Drucksensoren befinden sich auf der Isolierschicht und deren Pins sind mit den Pads der Leiterbahnen verbunden. Die Drucksensoren sind von einer kompressiblen Schicht umgeben, nur die Druckkugeln befinden sich im elastischen Außenmantel, vorzugsweise aus Stahl. Die vom Band auf den Außenmantel wirkende Druckkraft wirkt zu einem großen Anteil unmittelbar auf die Kraftsensoren. Ein Verspannen der Sensoren ist nicht erforderlich.

In einer bevorzugten Ausführungsform wird der Sensor mittels additiver Technik aufgebracht, wobei alternativ eine Bestückung mit fertigen passiven Sensoren ebenfalls möglich ist.

In dieser Variante werden entweder Drucksensoren mit Analogausgang bestückt oder mittels additivem Verfahren aufgebracht - also hergestellt. Jeder Sensor wird mit einer "horizontalen" und einer "vertikalen" elektrisch leitenden Verbindung kontaktiert. So entsteht eine Matrixstruktur. Für eine quadratische Matrix mit 10x10 Sensoren sind entsprechend 20 Leitungen auszuwerten. Mittels zweier Multiplexer für horizontale und vertikale Leitungen können die einzelnen Messwerte ausgelesen, verstärkt und ADgewandelt werden. Diese Elektronik kann entweder an der Stirnseite der Rolle oder zur Vermeidung zusätzlicher Leitungswege zwischen den Sensoren platziert werden. Denkbar ist auch eine zusätzliche Schicht unterhalb der Sensoren. Die einzelnen Kanäle werden über einen Bus (z.B. I2C oder SPC) an Gruppenmodule (wie Fig. 4) übertragen. Die Gruppenmodule können an der Stirnseite der Rolle oder innerhalb der Rolle untergebracht werden.

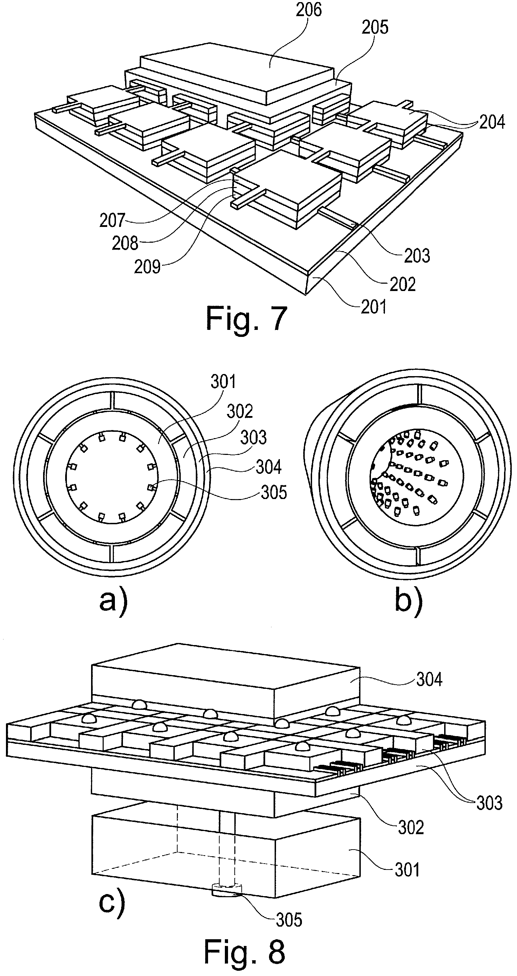

Fig. 7 zeigt den schematischen Aufbau einer Realisierung mit analogen Drucksensoren. Diese können einerseits bestückt, andererseits auch mittels additivem Verfahren hergestellt sein.

Die Kraftsensoren können aus Widerständen, Kapazitäten, Induktivitäten, Spannungselementen, Piezo-Sensoren sowie Hallschaltkreise oder anderen Halbleitern abgeleitet werden.

In einer bevorzugten Ausführungsform wird der Sensor als aktiver Sensor mit Analogausgang ausgeführt. Ein solcher Sensor wird beispielsweise unter diesem Link näher beschrieben:

https://www.digikey.de/product-detail/de/honeywell-sensing-and-productivitysolutions/FSS020WNSB/480-6894-ND/6605549

In der Schicht können alternativ auch aktive Sensoren mit Analogausgang untergebracht werden. Die Signalführung entspricht der Matrixstruktur (Fig. 7), die Einbettung kann gemäß Fig. 5 erfolgen.

In einer bevorzugten Ausführungsform wird ein additiv hergestellter oder diskret eingebauter Sensor verspannt, nämlich eingebettet in einer kompressiblen Schicht.

Fig. 5 zeigt eine mögliche Realisierung des Sensoreinbaus mit

101 Ausschnitt aus Rollenkörper
102 Isolierschicht
103 Leiterbahnen
104 Drucksensoren
105 kompressible Schicht
106 elastischer Außenmantel (Stahl).

Fig. 7 zeigt eine mögliche Realisierung additiv hergestellter Sensoren mit

201 Ausschnitt aus Rollenkörper
202 Isolierschicht
203 Leiterbahnen
204 Drucksensoren
205 kompressible Schicht
206 elastischer Außenmantel
207 oberer Elektrode
208 piezoresistive oder andere druckempfindliche Schicht
209 untere Elektrode.

Fig. 8 zeigt eine mögliche Realisierung additiv hergestellter Sensoren mit möglicher Realisierung einer Spannvorrichtung für Sensoren in einer Schicht

301 Ausschnitt aus Rollenkörper
302 Druckplatten
303 kompressible Schicht mit Drucksensoren und Verschaltung
304 elastischer Außenmantel
305 Spannschrauben.

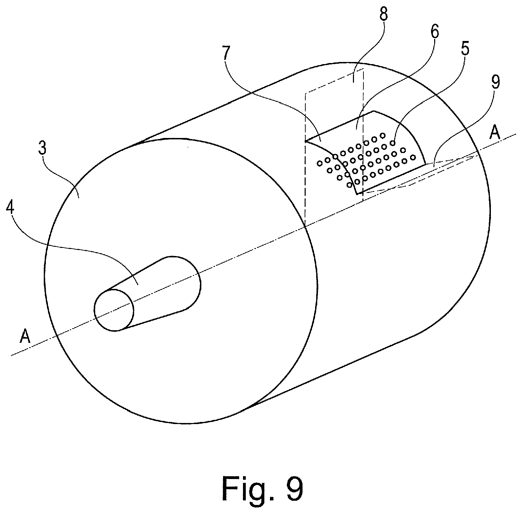

Fig. 9 zeigt eine Messrolle 3 zum Feststellen einer Eigenschaft eines über die Umfangsfläche der Messrolle 3 geführten bandförmigen Guts 1. Die Messrolle 3 weist einen sich entlang einer Längsachse A erstreckenden Messrollenkörper auf, der endseits Lagerzapfen 4 für eine drehbare Lagerung des Messrollenkörpers aufweist und die Umfangsfläche bildet. Die Messrolle weist eine Mehrzahl von unterhalb der Umfangsfläche nebeneinander angeordneten Sensoren 5 auf. Ein Segment 6 des Messrollenkörpers wird durch

• einen Bereich 7 der Umfangsfläche,
• zwei Radialebenen 8, 9, die sich in der Längsachse A des Messrollenkörpers schneiden und jeweils in eine Radialrichtung verlaufen und die Umfangsfläche schneiden, und
• zwei senkrecht zur Längsachse verlaufende Ebenen (in Fig. 9 nicht hervorgehoben), die die Umfangsfläche schneiden,

begrenzt. Die in eine Ebene abgerollte Fläche des Bereichs der Umfangsfläche hat eine Größe von x mm$^2$. In dem Segment sind eine Anzahl y Sensoren 5 angeordnet, wobei

$$y > 2x/100.$$

**Patentansprüche**

1. Messrolle zum Feststellen einer Eigenschaft eines über die Umfangsfläche der Messrolle geführten bandförmigen Guts, insbesondere Metallband (1), mit

   - einem sich entlang einer Längsachse (A) erstreckenden Messrollenkörper (3), der endseits Lagerzapfen (4) oder Buchsen für eine drehbare Lagerung des Messrollenkörpers (3) aufweist und die Umfangsfläche bildet und
   - einer Mehrzahl von unterhalb der Umfangsfläche nebeneinander angeordneten Sensoren (5),
   wobei der Messrollenkörper (3) ein Segment (6) umfasst, das

   • durch einen Bereich (7) der Umfangsfläche,
   • zwei Radialebenen (8, 9), die sich in der Längsachse (A) des Messrollenkörpers (3) schneiden und jeweils in eine Radialrichtung verlaufen und die Umfangsfläche schneiden, und
   • zwei senkrecht zur Längsachse (A) verlaufende Ebenen, die die Umfangsfläche schneiden,

   begrenzt wird, wobei die in eine Ebene abgerollte Fläche des Bereichs (7) der Umfangsfläche eine Größe von x mm$^2$ hat, wobei in dem Segment (6) eine Anzahl y Sensoren (5) angeordnet sind, wobei y mindestens größer oder gleich 3 ist,
**gekennzeichnet durch**

$$y > 2x/100.$$

2. Messrolle nach Anspruch 1, **dadurch gekennzeichnet, dass** in dem Segment (6) eine Anzahl y Sensoren (5) angeordnet sind,
wobei

$$y > 2x/10.$$

3. Messrolle nach Anspruch 1 oder 2, **dadurch gekennzeichnet, dass** die Sensoren (5) in dem Segment (6) in Umfangsrichtung und/oder in eine Richtung parallel zur Längsachse (A) des Messrollenkörpers (3) benachbart zueinander angeordnet sind.

4. Messrolle nach einem der Ansprüche 1 bis 3, **dadurch gekennzeichnet, dass** der Messrollenkörper (3) einen Grundkörper und eine auf dem Grundkörper angeordnete Schicht (2) aufweist und dass die in dem Segment (6) angeordneten Sensoren (5) in der Schicht angeordnet sind.

5. Messrolle nach Anspruch 4, **dadurch gekennzeichnet, dass** der jeweilige in dem Segment (6) angeordnete Sensor (5)

   - in dem Material, das die Schicht (2) bildet, eingebettet ist oder
   - in einer Ausnehmung in der Schicht (2) angeordnet ist, wobei die Ausnehmung vom Sensor (5) aus gesehen zumindest in die Mehrzahl der Umfangsrichtungen durch das Material der Schicht (2) begrenzt wird und/oder vom Sensor (5) aus gesehen in radialer Richtung nach außen durch das Material der Schicht begrenzt wird.

6. Messrolle nach einem der Ansprüche 4 oder 5, **dadurch gekennzeichnet, dass** die Schicht (2) durch eine Folie oder Matte gebildet wird, die den Außenumfang des Grundkörpers zumindest über 180° umschlingt.

7. Messrolle nach einem der Ansprüche 1 bis 6, **dadurch gekennzeichnet, dass** zumindest die Mehrzahl der in dem Segment (6) angeordneten Sensoren (5) Sensoren des gleichen Sensortyps sind.

8. Messrolle nach einem der Ansprüche 1 bis 7, **dadurch gekennzeichnet, dass** mehr als 75% der in dem Segment (6) vorhandenen Sensoren (6) nach einem Raster angeordnet sind und die Abstände benachbarter Sensoren innerhalb des Rasters gleich sind.

9. Messrolle nach Anspruch 8, **dadurch gekennzeichnet, dass** das Raster durch sich schneidende Linien gebildet wird, an deren Schnittpunkten die Sensoren (5) angeordnet sind, wobei die Linien des Rasters entweder in Umfangsrichtung oder parallel zur Längsrichtung des Grundkörpers verlaufen.

10. Messrolle nach einem der Ansprüche 1 bis 7, **dadurch gekennzeichnet, dass** der Grundkörper der Messrolle ein erstes Ende mit einem Lagerzapfen und ein zweites Ende mit einem Lagerzapfen (4) aufweist und die Lagerzapfen (4) des Grundkörpers drehbar in Ständern der Messrolle gelagert sind oder das erste Ende mit einer Buchse und das zweite Ende mit einer Buchse ausgestattet ist und Lagerzapfen von Ständern der Messrolle in die Buchsen eingreifen, so dass die Messrolle in den Ständern der Messrolle drehbar gelagert ist.

11. Verwendung einer Messrolle nach einem der Ansprüche 1 bis 10 zum Bestimmen der Planheit des über die Umfangsfläche der Messrolle geführten bandförmigen Guts und/oder zur Bestimmung von Oberflächenfehlern und/oder der Temperaturverteilung und/oder der Feuchte und/oder von Innenfehlern und/oder der Eigenspannungsverteilung in der Oberfläche des über die Umfangsfläche der Messrolle geführten bandförmigen Guts.

## Claims

1. Measuring roller for determining a property of a strip-shaped material, in particular metal strip (1), guided over the circumferential surface of the measuring roller, with

   - a measuring roller body (3) extending along a longitudinal axis (A), the measuring roller body (3) having bearing journals (4) or bushings at the ends for rotatably supporting the measuring roller body (3) and forming the circumferential surface, and
   - a plurality of sensors (5) arranged next to each other below the circumferential surface,
   wherein the measuring roller body (3) comprises a segment (6) which

      • is defined by a region (7) of the circumferential surface,
      • two radial planes (8, 9) that intersect in the longitudinal axis (A) of the measuring roller body (3) and each extend in a radial direction and intersect the circumferential surface, and
• two planes perpendicular to the longitudinal axis (A) that intersect the circumferential surface

wherein the area of the region (7) of the circumferential surface rolled out into a plane has a size of x mm$^2$, wherein a number y of sensors (5) are arranged in the segment (6), wherein y is at least greater than or equal to 3, **characterized by**

$$y > 2x/100.$$

2. Measuring roller according to claim 1, **characterized in that** a number y of sensors (5) are arranged in the segment (6), wherein

$$y > 2x/10.$$

3. Measuring roller according to claim 1 or 2, **characterized in that** the sensors (5) are arranged adjacent to one another in the segment (6) in the circumferential direction and/or in a direction parallel to the longitudinal axis (A) of the measuring roller body (3).

4. Measuring roller according to one of claims 1 to 3, **characterized in that** the measuring roller body (3) has a main body and a layer (2) arranged on the main body, and **in that** the sensors (5) arranged in the segment (6) are arranged in the layer.

5. Measuring roller according to claim 4, **characterized in that** the respective sensor (5) arranged in the segment (6)

   - is embedded in the material forming the layer (2), or
   - is arranged in a recess in the layer (2), wherein the recess is bounded by the material of the layer (2) in at least the majority of the circumferential directions as seen from the sensor (5) and/or is bounded in the radial direction outwards by the material of the layer as seen from the sensor (5).

6. Measuring roller according to one of claims 4 or 5, **characterized in that** the layer (2) is formed by a film or mat which wraps around the outer circumference of the main body over at least 180°.

7. Measuring roller according to one of claims 1 to 6, **characterized in that** at least the majority of the sensors (5) arranged in the segment (6) are sensors of the same sensor type.

8. Measuring roller according to one of claims 1 to 7, **characterized in that** more than 75% of the sensors (6) present in the segment (6) are arranged according to a grid and the distances between adjacent sensors within the grid are the same.

9. Measuring roller according to claim 8, **characterized in that** the grid is formed by intersecting lines at whose intersections the sensors (5) are arranged, wherein the lines of the grid run either in the circumferential direction or parallel to the longitudinal direction of the main body.

10. Measuring roller according to one of claims 1 to 7, **characterized in that** the main body of the measuring roller has a first end with a bearing journal and a second end with a bearing journal (4), and the bearing journals (4) of the main body are rotatably mounted in stands of the measuring roller, or the first end is equipped with a bushing and the second end is equipped with a bushing, and bearing journals of stands of the measuring roller engage in the bushings, so that the measuring roller is rotatably mounted in the stands of the measuring roller.

11. Use of a measuring roller according to one of claims 1 to 10 for determining the flatness of the strip-shaped material guided over the circumferential surface of the measuring roller and/or for determining surface defects and/or the temperature distribution and/or the moisture and/or internal defects and/or the internal stress distribution in the surface of the strip-shaped material guided over the circumferential surface of the measuring roller.

**Revendications**

1. Rouleau de mesure pour déterminer une propriété d'un produit en forme de bande guidé sur la surface périphérique du rouleau de mesure, en particulier une bande métallique (1), comprenant

   - un corps de rouleau de mesure (3) s'étendant le long d'un axe longitudinal (A), qui présente, aux extrémités, des tourillons (4) ou des douilles pour un montage rotatif du corps de rouleau de mesure (3) et forme la surface périphérique, et
   - une pluralité de capteurs (5) agencés les uns à côté des autres sous la surface périphérique, dans lequel le corps de rouleau de mesure (3) comprend un segment (6) qui est délimité

     • par une zone (7) de la surface périphérique,
     • deux plans radiaux (8, 9) qui se recoupent dans l'axe longitudinal (A) du corps de rouleau de mesure (3) et s'étendent chacun dans une direction radiale et recoupent la surface périphérique, et
• deux plans perpendiculaires à l'axe longitudinal (A) qui coupent la surface périphérique,

dans lequel la surface déroulée dans un plan de la zone (7) de la surface périphérique présente une taille de x mm$^2$, dans lequel un nombre y de capteurs (5) sont agencés dans le segment (6), dans lequel y est au moins supérieur ou égal à 3, **caractérisé par**

$$y > 2x/100.$$

2. Rouleau de mesure selon la revendication 1, **caractérisé en ce qu'**un nombre y de capteurs (5) sont agencés dans le segment (6), dans lequel

$$y > 2x/10.$$

3. Rouleau de mesure selon la revendication 1 ou 2, **caractérisé en ce que** les capteurs (5) dans le segment (6) sont agencés de manière adjacente les uns aux autres dans la direction circonférentielle et/ou dans une direction parallèle à l'axe longitudinal (A) du corps de rouleau de mesure (3).

4. Rouleau de mesure selon l'une quelconque des revendications 1 à 3, **caractérisé en ce que** le corps de rouleau de mesure (3) présente un corps de base et une couche (2) agencée sur le corps de base, et **en ce que** les capteurs (5) agencés dans le segment (6) sont agencés dans la couche.

5. Rouleau de mesure selon la revendication 4, **caractérisé en ce que** le capteur respectif (5) disposé dans le segment (6)

   - est incorporé dans le matériau formant la couche (2) ou
   - est agencé dans un évidement dans la couche (2), dans lequel l'évidement est délimité par le matériau de la couche (2) vu du capteur (5) au moins dans la majorité des directions circonférentielles et/ou est délimité par le matériau de la couche vu du capteur (5) dans la direction radiale vers l'extérieur.

6. Rouleau de mesure selon l'une quelconque des revendications 4 ou 5, **caractérisé en ce que** la couche (2) est formée par une feuille ou une nappe qui entoure la périphérie extérieure du corps de base sur au moins 180°.

7. Rouleau de mesure selon l'une quelconque des revendications 1 à 6, **caractérisé en ce qu'**au moins la majorité des capteurs (5) agencés dans le segment (6) sont des capteurs du même type de capteur.

8. Rouleau de mesure selon l'une quelconque des revendications 1 à 7, **caractérisé en ce que** plus de 75 % des capteurs (6) présents dans le segment (6) sont agencés selon une grille et les distances entre des capteurs voisins à l'intérieur de la grille sont les mêmes.

9. Rouleau de mesure selon la revendication 8, **caractérisé en ce que** la grille est formée par des lignes qui se recoupent, aux points d'intersection desquelles sont agencés les capteurs (5), dans lequel les lignes de la grille s'étendent soit dans la direction circonférentielle, soit parallèlement à la direction longitudinale du corps de base.

10. Rouleau de mesure selon l'une quelconque des revendications 1 à 7, **caractérisé en ce que** le corps de base du rouleau de mesure présente une première extrémité avec un tourillon et une seconde extrémité avec un tourillon (4), et les tourillons (4) du corps de base sont montés de manière à pouvoir tourner dans des montants du rouleau de mesure, ou la première extrémité est équipée d'une douille et la seconde extrémité d'une douille, et les tourillons des montants du rouleau de mesure viennent en prise dans les douilles de sorte que le rouleau de mesure soit monté de manière à pouvoir tourner dans les montants du rouleau de mesure.

11. Utilisation d'un rouleau de mesure selon l'une quelconque des revendications 1 à 10 pour déterminer la planéité du produit en forme de bande guidé sur la surface périphérique du rouleau de mesure et/ou pour déterminer les défauts de surface et/ou la répartition de la température et/ou l'humidité et/ou les défauts internes et/ou la répartition de tension résiduelle dans la surface du produit en forme de bande guidé sur la surface périphérique du rouleau de mesure.

Fig. 1

Fig. 2

1.1 1.2 1.3 1.4 1.128

2.1 2.2 2.3 2.4 2.128

N.1 N.2 N.3 N.4 N.128

Kanalmodul

Anschluss von
N*128
Drucksensoren

• Bereitstellung der
  Versorgungspannung
• Einlesen der Sensorsignale
  und Vorverarbeitung
    • Plausibilisierung
    • Komprimierung

Weiterleitung an Gruppenmodul

## Fig. 3

Gruppenmodul

Zusammenfassung
der Gruppensignale
• Plausibilisierung
• Komprimierung

Weiterleitung
zum Sendemodul

Sendemodul

optisch
oder Funk

Empfangsmodul

Auswertemodul

Auswertealgorithmen
zur Ermittlung von
Messgrößen,wie
• Kantendetektion
• Planheit
• Temperaturverteilung
• Faltenerkennung

Weiterleitung an
• Bedienung
• Visualisierung
• Automatisierung

## Fig. 4

Fig. 5

| 1.1 | 1.2 | | 1.10 |
| 2.1 | 2.2 | | 2.10 |
| 10.1 | 10.2 | | 10.10 |

Kanalmodul

Drucksensormatrix:

Anschluss von
10x10 (Beispiel)
analogen Drucksensoren

• Multiplexer
• Signalvorverstärkung
• AD-Wandlung
• Vorverarbeitung
     • Plausibilisierung
     • Komprimierung

Weiterleitung an Gruppenmodul

Fig. 6

**Fig. 7**

a)                                    b)

c)

**Fig. 8**

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020174001 A1
- WO 2020120329 A1
- DE 102014115023 A1
- DE 202014006820 U1